# EUROPÄISCHE PATENTSCHRIFT

(11) **EP 2 803 838 B1**
(45) Veröffentlichungstag und Bekanntmachung des Hinweises auf die Patenterteilung: **07.09.2016**
(21) Anmeldenummer: 14164677.8
(22) Anmeldetag: 15.04.2014
(51) Int. Cl.: F02B 37/18, F01D 17/14, F01D 25/24, F01D 25/30, F02C 6/12

(54) **Abgasturbolader-Anordnung**
Exhaust gas turbocharger assembly
Système de turbocompresseur à gaz d'échappement

(30) Priorität: 15.05.2013 DE 102013209049
(43) Veröffentlichungstag der Anmeldung: 19.11.2014
(73) Patentinhaber: Bayerische Motoren Werke Aktiengesellschaft, 80809 München (DE)
(72) Erfinder: Velthuis, Jan, 86899 Landsberg (DE)

(56) Entgegenhaltungen:
- EP-A1- 2 295 769
- EP-A1- 2 527 616
- EP-A1- 2 554 820
- DE-A1-102009 015 899
- DE-A1-102011 117 339
- DE-A1-102012 202 505
- FR-A1- 2 864 994

## Beschreibung

Die Erfindung betrifft eine Abgasturbolader-Anordnung mit den Merkmalen des Oberbegriffs des Anspruchs 1.

Eine derartige Abgasturbolader-Anordnung ist beispielsweise aus der DE 10 2011 117 339 A1 zu entnehmen. Weitere Abgasturbolader-Anordnungen sind beispielsweise zu entnehmen aus EP 2 554 820 A1, aus FR 2 864 499 A1, aus DE 10 2010 013 367 A1 oder auch aus DE 10 2010 031 500 A1.

Bei mit einem Turbolader ausgestatteten Verbrennungsmotoren im Kraftfahrzeugbereich wird der Abgasstrom über eine im Abgaskanal angeordnete Turbine geführt, welche auf der Zuluftseite über eine typischerweise starre Wellenverbindung einen Verdichter zum Verdichten der dem Verbrennungsraum zugeführten Frischluft (Ladeluft) antreibt. Der über die Turbine geleitete Abgasstrom ist dabei mit Hilfe des Bypasskanals und der Klappenvorrichtung zur Regulierung des Abgasstroms im Bypasskanal, insbesondere eine sogenannte Wastegate-Klappe, regelbar. Die Verstellung der Klappenvorrichtung erfolgt hierbei über einen Aktuator, beispielsweise eine Druckdose, die anhand eines Differenzdruckes zwischen Abgasseite und Zuluftseite die Klappenvorrichtung ansteuert. Daneben besteht auch die Möglichkeit eines elektrischen Stellantriebs zur Steuerung der Klappenvorrichtung. Bei geschlossener Klappenvorrichtung strömt das gesamte Abgas über die Turbine.

Im Abgastrakt ist regelmäßig ein Katalysator zur Abgasnachbehandlung angeordnet. Dieser entfaltet seine volle Wirkung üblicherweise erst bei Erreichen einer gewissen Betriebstemperatur. Um möglichst zügig die Katalysator-Betriebstemperatur zu erreichen ist es beispielsweise aus der DE 10 2010 031 500 A1 bereits bekannt, dass bei einem Kaltstart die Klappenvorrichtung geöffnet wird, so dass ein möglichst großer Abgasstrom direkt über den Katalysator und nicht über die Turbine geführt wird, um keine Energie zu verlieren.

Insbesondere bei diesem Betriebszustand bei bevorzugt vollständig geöffneter Klappenvorrichtung treten teilweise Akustikprobleme auf, beispielsweise ein Klappenrascheln oder ein Klappenklirren.

Zur Vermeidung von störenden Geräuschen ist in der DE 10 2011 117 339 A1 eine Anordnung beschrieben, bei der ein Ventilelement der Klappenvorrichtung bei geöffnetem Bypass-Ventil gegen einen Anschlag gedrückt wird, sodass das Ventilelement spielfrei am Anschlag anliegt. Der Anschlag ist dabei durch eine Schraube ausgebildet.

Aus der EP 2 554 820 A1 ist ebenfalls eine Klappenvorrichtung zu entnehmen, bei der eine Klappe um ein randseitig angeordnetes Drehlager drehbar angeordnet ist. Die Drehbewegung ist dabei durch einen am Gehäuse ausgebildeten Anschlag begrenzt, gegen den die Klappe anschlagen kann.

Ausgehend hiervon liegt der Erfindung die Aufgabe zugrunde, eine Abgasturbolader-Anordnung anzugeben, bei der derartige Akustikprobleme vermieden sind.

Die Aufgabe wird gemäß der Erfindung gelöst durch eine Abgasturbolader-Anordnung mit dem Merkmalen des Anspruchs 1. Diese Anordnung umfasst ein Gehäuse, insbesondere das Turbolader-Gehäuse, welches einen Strömungskanal und einen Bypasskanal aufweist. Der Bypasskanal ist von einer steuerbaren Klappenvorrichtung, der sogenannten Wastegate-Klappe verschließbar. Im Strömungskanal ist üblicherweise die Turbine des Abgasturboladers angeordnet. Der Bypasskanal ist üblicherweise ein Abzweigkanal zu diesem Strömungskanal. Die Klappenvorrichtung verschließt zur Regulierung des über die Turbine geführten Abluftstroms eine Bypassöffnung mit einem Verschlussbereich.

Zur Vermeidung der Akustikprobleme ist nunmehr ein Anschlag für die Klappenvorrichtung ausgebildet, gegen den die Klappenvorrichtung in einem Bypass-zustand mit vollständig geöffneter Klappenvorrichtung mit einem Widerlager zum Anliegen kommt. Durch den Anschlag wird daher die Klappenvorrichtung insgesamt in einer definierten Position gehalten, so dass eine Bewegung, die Akustikproblem hervorrufen kann, nicht mehr zugelassen ist. Insofern wird daher durch den Anschlag eine Bewegung von Bauteilen und damit die Entstehung von störenden Geräuschen verhindert.

Die Klappenvorrichtung umfasst einen Verschlussbereich, mit dem die Bypassöffnung des Bypasskanals reversibel verschließbar ist. Randseitig zum Verschlussbereich ist die Dreh- oder Schwenkachse ausgebildet, um die die Verschlussvorrichtung drehbar gelagert ist. Der Verschlussbereich schwenkt daher im Wesentlichen um seinen einen Rand zum reversiblen Verschließen und Öffnen der Bypassöffnung. Das Widerlager ist nunmehr auf der dem Verschlussbereich gegenüberliegenden Seite der Drehachse quasi als Verlängerung des Verschlussbereichs über die Drehachse hinaus ausgebildet. Der Verschlussbereich wird daher gebildet durch den insbesondere als Nase ausgebildeten Teilbereich der Verschlussklappe auf der einen Seite der Drehachse. Dadurch ist in vorteilhafter Weise einerseits durch den Verschlussbereich ein erster und andererseits durch das Widerlager ein zweiter Hebelarm ausgebildet. Das in den Bypasskanal einströmende Abgas übt aufgrund der Strömungsverhältnisse eine gewisse Kraft auf die Klappenvorrichtung aus, so dass diese in die geöffnete Stellung gedrückt wird. Durch die Anordnung des Widerlagers als Verlängerung des Verschlussbereichs über die Drehachse hinaus wird daher in vorteilhafter Weise ein Hebeleffekt ausgenutzt.

Bei der Klappenvorrichtung handelt es sich vorzugsweise um eine mehrteilige Klappenvorrichtung mit einem Klappenhebel sowie mit einer daran befestigten, den eigentlichen Verschlussbereich umfassenden Verschlussklappe zum reversiblen Verschließen der Bypassöffnung. Die beiden Teile, nämlich der Klappenhebel einerseits sowie die eigentliche Verschlussklappe andererseits sind dabei vorzugsweise zumindest in einem gewissen Grad relativ zueinander beweglich. Hierdurch sind Ausgleichsbewegungen zwischen der Verschlussklappe und dem Klappenhebel ermöglicht, die beispielsweise aufgrund von unterschiedlichen Herstellungstoleranzen oder auch bei unterschiedlichem Verschleiß erforderlich sind, um eine exakte Positionierung der Verschlussklappe für ein dichtendes Verschließen der Bypassöffnung zu gewährleisten. Der Aktuator zum Verstellen der Klappenvorrichtung wirkt dabei regelmäßig auf den Klappenhebel ein. Insbesondere bei dieser zweiteiligen Ausführungsvariante können Relativbewegungen zwischen den beiden Teilen zu den unerwünschten Störgeräuschen führen. Da die Klappenvorrichtung mit ihrem Widerlager gegen den Anschlag anliegt wird der Bewegungsfreiheitsgrad der beiden Teile zueinander zumindest eingeschränkt.

Zweckdienlicherweise ist das Widerlager dabei an der Verschlussklappe ausgeformt. Da gleichzeitig die Stellbewegung über den Klappenhebel ausgeübt wird, wird dadurch die Verschlussklappe zwischen Anschlag und Klappenhebel eingeklemmt. Es erfolgt daher ein wechselseitiges Verpressen der beiden Teile zueinander, so dass eine Relativbewegung zwischen den beiden Teilen unterbunden ist.

Vorzugsweise wird die Klappenvorrichtung im geöffneten Bypass-Zustand aktiv gegen den Anschlag gepresst. Die Klappenvorrichtung wird daher aktiv im Bypass-Zustand gehalten und es wird ein Anpressdruck gegen den Anschlag aufrechterhalten. Dadurch wird die gewünschte Verspannung zwischen Klappenhebel und Verschlussklappe aufrecht erhalten.

Das aktive Anpressen wird vorzugsweise durch eine aktive Ansteuerung eines elektrischen Aktuators erzielt, welcher eine Dreh-Stellbewegung auf den Klappenhebel ausübt. Über diesen ist eine gezielte Ansteuerung ermöglicht. Zudem lässt er sich einfach in ein Onboard-Diagnosesystem einbinden, um beispielsweise die Klappenvorrichtung auf Fehlfunktionen überprüfen zu können.

Neben derartigen elektrisch angetriebenen Aktuatoren sind auch passiv wirkende sogenannte Druckdosen bekannt, über die die Klappenvorrichtung in Abhängigkeit einer Druckdifferenz zwischen der Abgasseite und einer Zuluftseite angesteuert wird. Bei sogenannten Unterdruckdosen ist dabei der Ausgangs- oder Ruhezustand die geöffnete Stellung der Klappenvorrichtung mit geöffnetem Bypasskanal. Beim Motorstart ist daher der Bypasskanal automatisch geöffnet. Hierzu ist üblicherweise ein Federelement vorgesehen. Beim Betrieb schließt dann die Klappenvorrichtung in Abhängigkeit der jeweiligen herrschenden Druckverhältnisse.

Das Widerlager der Klappenvorrichtung ist dabei zweckdienlicherweise nach Art einer nasenförmigen Anformung ausgebildet. Die eigentliche Verschlussklappe wird also um diese Anformung verlängert, und zwar insbesondere in Längsrichtung quer zu einer Dreh- oder Schwenkachse, um die die Klappenvorrichtung verschwenkt wird.

Zweckdienlicherweise ist dabei vorgesehen, dass durch den Verschlussbereich der zweite Hebelarm um ein Vielfaches kürzer als der erste Hebelarm ist. Das Hebelverhältnis liegt dabei vorzugsweise bei zumindest 1:5 oder größer.

Im Hinblick auf eine möglichst kostengünstige Ausgestaltung ist der Anschlag am Gehäuse ausgeformt. Es sind also keine zusätzlichen, separaten Bauteile zur Erzeugung des Anschlags erforderlich. Zweckdienlicherweise ist dabei der Anschlag in einfacher Weise durch eine Konturierung einer Gehäusewand ausgebildet. Bei dieser Konturierung handelt es sich insbesondere um eine in die Gehäusewand eingearbeitete Ausmuldung oder Stufe.

Bei dem Gehäuse handelt es sich insgesamt üblicherweise um ein (Metall-) Gussteil, so dass keine oder kaum Zusatzkosten für die Ausgestaltung des Anschlags entstehen. Um eine möglichst definierte und hochgenaue Anschlagsposition auszubilden, ist in bevorzugter Ausbildung eine Nachbearbeitung des Anschlags beispielsweise durch Schleifen etc. vorgenommen.

Ein Ausführungsbeispiel der Erfindung wird im Folgenden anhand der Figuren näher erläutert. Diese zeigen:
- Fig. 1: einen Schnitt durch ein Turbinengehäuse mit einer darin angeordneten Klappenvorrichtung, welche in einem Teilschnitt dargestellt ist sowie
- Fig. 2: eine weitere Schnittdarstellung des Turbinengehäuses nach Fig. 1 mit einer Schnittansicht der Klappenvorrichtung.

Das Turbinengehäuse 2 weist einen Abgas-Strömungskanal 4 auf, welcher zu einer hier nicht näher dargestellten Turbine führt. Der Strömungskanal 4 ist in hier nicht näher dargestellter Weise einerseits mit einem motorseitigen Abgaskrümmer und ausgangsseitig mit dem weiteren Abgastrakt verbunden.

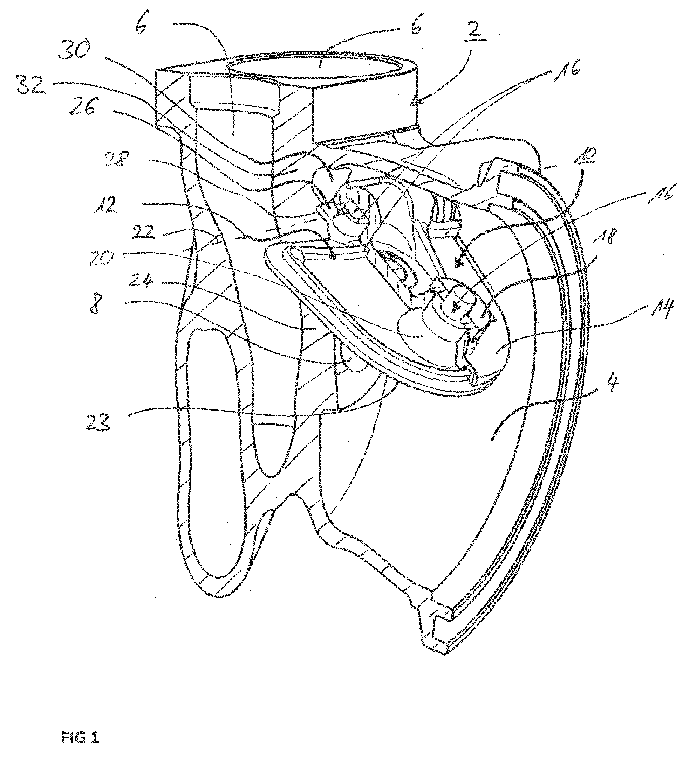

Das Turbinengehäuse 2 weist im Ausführungsbeispiel zwei Bypasskanäle 6 auf, von denen der eine Bypasskanal in Fig. 1 geschnitten dargestellt ist. Die Bypasskanäle 6 führen dabei direkt unter Umgehung der Turbine zu einem hier nicht näher dargestellten Katalysator, so dass dieser unmittelbar von dem Abgas durchströmt wird. Dem Bypasskanal 6 ist dabei jeweils eine Bypassöffnung 8 zugeordnet, welche über eine Klappenvorrichtung 10 verschließbar ist. Die Klappenvorrichtung 10 ist dabei mehrteilig ausgebildet und weist eine Verschlussklappe 12 sowie einen Klappenhebel 14 auf. Die beiden Elemente 12, 14 sind aneinander über eine Befestigungseinrichtung 16 befestigt, und zwar derart, dass eine gewisse Ausgleichsbewegung zwischen diesen beiden Teilen 12, 14 grundsätzlich ermöglicht ist. Die Befestigungseinrichtung 16 umfasst hierbei eine Haltescheibe 18 sowie ein an der Verschlussklappe 12 befestigtes oder ausgeformtes, insbesondere kalottenförmiges Befestigungselement 20, welches mit einem Bolzen, insbesondere Schraubbolzen durch eine entsprechende Öffnung im Klappenhebel 14 hindurch reicht. Die Öffnung ist hierbei domartig ausgebildet. Die Haltescheibe 18 ist mit dem überstehenden Teilbereich des Bolzens befestigt, insbesondere schraubbefestigt.

Der Klappenhebel 14 ist um eine Drehachse 22 schwenkbeweglich am Turbinengehäuse 2 gelagert. Die Schwenkbewegung wird hierbei aktiv mit Hilfe eines nicht näher dargestellten Aktuators verstellt, insbesondere ein elektromotorischer Antrieb. Die Verstellbewegung wird über den Klappenhebel 14 auf die Verschlussklappe 12 übertragen. Die Verschlussklappe 12 definiert zugleich einen Verschlussbereich 23, mit dem die Bypassöffnung 8 im geschlossenen Zustand dichtend verschlossen ist. Im Ausführungsbeispiel mit den beiden Bypasskanälen 6 überdeckt die Verschlussklappe 12 beide Bypassöffnungen 8 gleichzeitig. Die beiden Bypassöffnungen 8 sind über einen Zwischensteg 24 voneinander getrennt. Der Klappendeckel 14 überdeckt die Verschlussklappe 12 im Verschlussbereich 23 vorzugsweise vollständig, so dass die Verschlussklappe 12 über den Klappendeckel 14 zuverlässig geführt ist und auch vollflächig gegen die Bypassöffnungen 8 im geschlossenen Zustand gedrückt wird.

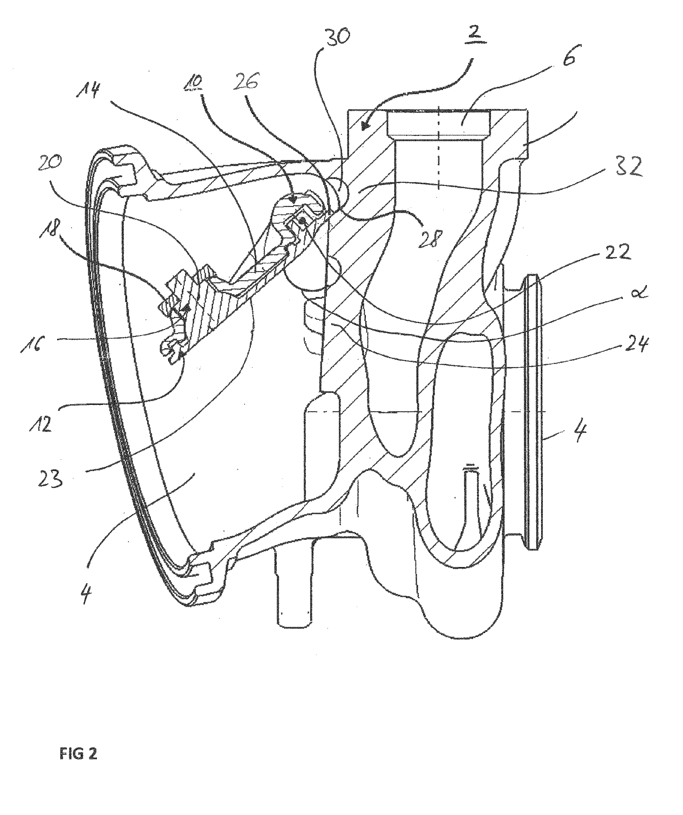

Die Verschlussklappe 12 weist in Verlängerung über die Drehachse 22 hinaus eine in etwa nasenförmige Anformung auf, die ein Widerlager 26 zu einem am Turbinengehäuse 2 ausgeformten Anschlag 28 bildet. In den Figuren 1 und 2 ist die Klappenvorrichtung 10 im vollständig geöffneten Bypass-Zustand gezeigt. In diesem Zustand kommt das Widerlager 26 zum Anliegen an den Anschlag 28. Die Klappenvorrichtung 10 wird dabei mit Hilfe des Aktuators aktiv in diese Stellung verfahren und in dieser Stellung auch aktiv mit einer vorgegebenen Spannkraft gehalten. Hierdurch erfolgt eine Verspannung der Verschlussklappe 12 gegenüber dem Klappendeckel 14, so dass jegliche Relativbewegung zwischen Verschlussklappe 12 und Klappendeckel 14 und damit die Entstehung von Geräuschen unterbunden ist.

Wie insbesondere aus der Figur 2 zu entnehmen ist, ist der Anschlag 28 durch eine muldenartige Ausformung 30 in einem Wandbereich 32 des Turbinengehäuses 2 ausgebildet. Bei der Schwenkbewegung kann daher das über die Drehachse 22 überstehende Widerlager 26 in die Ausformung 30 einschwenken, bis es gegen den Anschlag 28 anschlägt.

Der Öffnungswinkel α (vgl. Figur 2) der Klappenvorrichtung 10 gegenüber der Bypassöffnung 8 in dem vollständig geöffneten Bypass-Zustand liegt vorzugsweise bei über 60°. Dieser sehr große Öffnungswinkel α wird üblicherweise ausschließlich beim Kaltstarten zum schnellen Erwärmen des Katalysators eingestellt. Beim normalen warmen Betrieb nimmt die Klappenvorrichtung 10 typischerweise lediglich einen Öffnungswinkel bis maximal etwa 5° ein. Bei vollständig geöffneter Klappenvorrichtung 10 beträgt der Anteil des über den Bypasskanals 6 geleiteten Abgases vorzugsweise etwa 2/3 des gesamten Abgasstroms. Dadurch ist ein schnelles und effektives Aufheizen des Katalysators erreicht.

### Bezugszeichenliste

- 2: Turbinengehäuse
- 4: Strömungskanal
- 6: Bypasskanal
- 8: Bypassöffnung
- 10: Klappenvorrichtung
- 12: Verschlussklappe
- 14: Klappenhebel
- 16: Befestigungseinrichtung
- 18: Haltescheibe
- 20: Befestigungselement
- 22: Drehachse
- 23: Verschlussbereich
- 24: Zwischensteg
- 26: Widerlager
- 28: Anschlag
- 30: Ausformung
- 32: Wandbereich

- α: Öffnungswinkel

## Patentansprüche

1. Abgasturbolader-Anordnung umfassend ein Gehäuse (2) mit einem Strömungskanal (4) und einem Bypasskanal (6), wobei eine Bypassöffnung (8) mittels eines Verschlussbereiches (23) einer steuerbaren Klappenvorrichtung (10) verschließbar ist, wobei die Klappenvorrichtung (10) um eine randseitig des Verschlussbereichs (23) angeordnete Drehachse (22) drehbar gelagert ist, wobei weiterhin ein Anschlag (28) für die Klappenvorrichtung (10) angeordnet ist und die Klappenvorrichtung (10) ein Widerlager (26) aufweist, das in einem Bypass-Zustand mit vollständig geöffneter Klappenvorrichtung gegen den Anschlag (28) zum Anliegen kommt,
**dadurch gekennzeichnet, dass** das Widerlager (26) auf der dem Verschlussbereich (23) gegenüberliegenden Seite der Drehachse (22) ausgebildet ist.

2. Abgasturbolader-Anordnung nach Anspruch 1,
**dadurch gekennzeichnet, dass** die Klappenvorrichtung (10) einen Klappenhebel (14) sowie eine daran befestigte Verschlussklappe (12) zum reversiblen Verschließen einer Bypassöffnung (8) des Bypasskanals (6) aufweist.

3. Abgasturbolader-Anordnung nach Anspruch 2,
**dadurch gekennzeichnet, dass** das Widerlager (26) an der Verschlussklappe (12) ausgeformt ist.

4. Abgasturbolader-Anordnung nach einem der vorhergehenden Ansprüche,
**dadurch gekennzeichnet, dass** die Klappenvorrichtung (10) im geöffneten Bypass-Zustand aktiv gegen den Anschlag (28) gepresst ist.

5. Abgasturbolader-Anordnung nach einem der vorhergehenden Ansprüche,
**dadurch gekennzeichnet, dass** der Verschlussbereich (23) einen ersten Hebelarm und das Widerlager (26) einen zweiten Hebelarm definiert, der um ein Vielfaches kürzer als der erste Hebelarm ist.

6. Abgasturbolader-Anordnung nach einem der vorhergehenden Ansprüche,
**dadurch gekennzeichnet, dass** der Anschlag (28) am Gehäuse (2) ausgeformt ist.

7. Abgasturbolader-Anordnung nach Anspruch 6,
**dadurch gekennzeichnet, dass** der Anschlag (28) im Gehäuse (2) durch eine Konturierung eines Wandbereichs (32) ausgebildet ist.

8. Abgasturbolader-Anordnung nach Anspruch 7,
**dadurch gekennzeichnet, dass** die Konturierung durch eine Ausformung (30) gebildet ist.

## Claims

1. An exhaust turbocharger arrangement comprising a housing (2) with a flow channel (4) and a bypass channel (6), wherein a bypass opening (8) can be closed by a closure region (23) of a controllable flap device (10), wherein the flap device (10) is mounted rotatably about a rotational axis (22) which is arranged on the edge of the closure region (23), wherein furthermore a stop (28) is arranged for the flap device (10) and the flap device (10) has an abutment (26) which comes to rest against the stop (28) in a bypass state when the flap device is fully open,
**characterised in that**
the abutment (26) is configured on the side of the rotational axis (22) opposite the closure region (23).

2. An exhaust turbocharger arrangement according to claim 1,
**characterised in that**
the flap device (10) has a flap lever (14) and a cover flap (12), fastened thereto, for the reversible closure of a bypass opening (8) of the bypass channel (6).

3. An exhaust turbocharger arrangement according to claim 2,
**characterised in that**
the abutment (26) is formed on the cover flap (12).

4. An exhaust turbocharger arrangement according to any one of the preceding claims,
**characterised in that**
the flap device (10) is actively pressed against the stop (28) in the open bypass state.

5. An exhaust turbocharger arrangement according to any one of the preceding claims,
**characterised in that**
the closure region (23) defines a first lever arm and the abutment (26) defines a second lever arm which is several times shorter than the first lever arm.

6. An exhaust turbocharger arrangement according to any one of the preceding claims,
**characterised in that**
the stop (28) is formed on the housing (2).

7. An exhaust turbocharger arrangement according to claim 6,
**characterised in that**
the stop (28) is configured in the housing (2), by a contouring of a wall region (32).

8. An exhaust turbocharger arrangement according to claim 7,
**characterised in that**
the contouring is formed by a moulding (30).

## Revendications

1. Dispositif de turbocompresseur de gaz d'échappement comprenant un carter (2) équipé d'un canal de circulation (4) et d'un canal de dérivation (6), une ouverture de dérivation (8) pouvant être fermée au moyen d'une zone de fermeture (23) d'un dispositif de clapet commandable (10), ce dispositif de clapet (10) étant monté mobile en rotation autour d'un axe de rotation (22) situé au bord de la zone de fermeture (23), une butée (28) pour le dispositif de clapet (10) étant en outre prévue, et le dispositif dé clapet (10) comprenant une contre butée (26) qui, dans un état de dérivation dans lequel le dispositif de clapet est totalement ouvert vient en appui contre la butée (28),
**caractérisé en ce que**
la contre butée (26) est réalisée du côté de l'axe de rotation (22) situé à l'opposé de la zone de fermeture (23).

2. Dispositif de turbocompresseur de gaz d'échappement conforme à la revendication 1,
**caractérisé en ce que**
le dispositif de clapet (10) comprend un levier de clapet (14) ainsi qu'un clapet de fermeture (12) fixé sur celui-ci pour permettre la fermeture réversible d'une ouverture de dérivation (8) du canal de dérivation (6).

3. Dispositif de turbocompresseur de gaz d'échappement conforme à la revendication 2,
**caractérisé en ce que**
la contre butée (26) est formée sur le clapet de fermeture (12).

4. Dispositif de turbocompresseur de gaz d'échappement conforme à l'une des revendications précédentes,
**caractérisé en ce qu'**
à l'état de dérivation ouvert, le dispositif de clapet (10) est activement comprimé contre la butée (28).

5. Dispositif de turbocompresseur de gaz d'échappement conforme à l'une des revendications précédentes,
**caractérisé en ce que**
la zone de fermeture (23) définit un premier bras de levier et la contre butée (26) définit un second bras de levier qui est plusieurs fois plus court que le premier bras de levier.

6. Dispositif de turbocompresseur de gaz d'échappement conforme à l'une des revendications précédentes,
**caractérisé en ce que**
la butée (28) est formée sur le carter (2).

7. Dispositif de turbocompresseur de gaz d'échappement conforme à la revendication 6,
**caractérisé en ce que**
la butée (28) est formée dans le carter (2) par un profilage d'une zone de paroi (32).

8. Dispositif de turbocompresseur de gaz d'échappement conforme à la revendication 7
**caractérisé en ce que**
le profilage est formé par une déformation (30).
